# EUROPEAN PATENT APPLICATION

(11) **EP 4 375 533 A1**
(43) Date of publication of application: **29.05.2024**
(21) Application number: 23208270.1
(22) Date of filing: 07.11.2023
(51) Int. Cl.: F16F 1/38, F16F 9/04, F16F 9/36, F16F 9/54, F16F 9/32

(54) **VEHICLE, AND AIR SPRING ASSEMBLY AND UPPER SUPPORT THEREOF**

(30) Priority: 08.11.2022 CN 202211389481
(71) Applicant: Nio Technology (Anhui) Co., Ltd, Hefei City, Anhui 230601 (CN)
(72) Inventor: FENG, Xinyun, Hefei City, 230601 (CN); YAO, Qunfei, Hefei City, 230601 (CN); YANG, Tian, Hefei City, 230601 (CN); WU, Zhenqiang, Hefei City, 230601 (CN)
(74) Representative: v. Bezold & Partner Patentanwälte - PartG mbB

(57) **Abstract**

The disclosure relates to a vehicle, and an air spring assembly (10) and an upper support (300) thereof. By means of forming an air passing channel (330) in the upper support, pressurized air can flow to an upper surface (320) of the upper support, so as to achieve the balance of air pressure on two sides of the upper support and thus achieve the force balance to avoid receiving force on one side, thereby preventing offset of the stiffness curve of the upper support and prolonging the service life of the upper support.

## Description

### TECHNICAL FIELD

The disclosure relates to the technical field of vehicles, and in particular to a vehicle, and an air spring assembly and an upper support thereof.

### BACKGROUND

In an air spring assembly, an upper support is assembled on an upper end portion of a piston rod and arranged on an outer side wall of the piston rod in a sleeving manner to enable the piston rod to reciprocate in an axial direction. Meanwhile, a lower surface of the upper support will receive a preload force applied by pressurized air from below, thus causing offset of the stiffness curve of the upper support and affecting the service life of the upper support.

### SUMMARY

On this basis, it is necessary to provide a vehicle, and an air spring assembly and an upper support thereof, aiming at solving the problem of affecting the service life of the upper support.

The technical solution thereof is as follows.

In one aspect, an upper support for an air spring assembly is provided. The upper support has a lower surface facing a compression chamber of the air spring assembly and an upper surface facing away from the lower surface. The upper support is further provided with a mounting through-cavity through which a piston rod passes and an air passing channel spaced apart from the mounting through-cavity in a radial direction of the upper support, two ends of the mounting through-cavity respectively extending to the upper surface and the lower surface, and two ends of the air passing channel respectively extending to the upper surface and the lower surface.

The technical solution is further explained below.

In one of the embodiments, the upper support includes a outer shell and an inner core module, wherein the mounting through-cavity is arranged in the inner core module, the outer shell is sleeved on a circumferential side wall of the inner core module(360) and elastically connected with the inner core module(360) to enable the inner core module to reciprocate relative to the outer shell in an axial direction of the piston rod, and the outer shell and the inner core module jointly define the upper surface and the lower surface; and at least one of the outer shell and the inner core module is provided with the air passing channel.

In one of the embodiments, the inner core module includes a core body and an elastic connector, the mounting through-cavity is arranged in the core body, and the elastic connector wraps at least a circumferential side wall of the core body to elastically connect the core body to the outer shell to enable the core body to reciprocate relative to the outer shell in an axial direction of the mounting through-cavity.

In one of the embodiments, the elastic connector is configured as an elastic connecting ring, which is arranged on the circumferential side wall of the core body in a sleeving manner and is fixedly connected to the core body, the outer shell is arranged on a circumferential side wall of the elastic connecting ring in a sleeving manner and is fixedly connected to the elastic connecting ring, and the air passing channel is arranged in the core body; or the elastic connector is configured as an elastic connecting sleeve, which is arranged on an outer side wall of the core body in a sleeving manner and is fixedly connected to the core body, the outer shell is arranged on a circumferential side wall of the elastic connecting sleeve in a sleeving manner and is fixedly connected to the elastic connecting sleeve, the elastic connecting sleeve is provided with a first through hole, the core body is provided with a second through hole, and the second through hole correspondingly communicates with the first through hole to form the air passing channel.

In one of the embodiments, the air passing channel is arranged in an outer side wall of the outer shell.

In another aspect, an air spring assembly is provided, which includes:
a shell body, which is provided with a compression chamber and a cavity located on an upper side of the compression chamber and communicating with the compression chamber;
a piston rod, which is arranged in the cavity in a penetrating manner and is capable of reciprocating relative to the shell body in an axial direction of the piston rod; and
a packaging assembly and the above upper support, wherein the packaging assembly fits with the upper surface in a sealing manner to package the upper support in the cavity, the upper support is arranged on an outer side wall of the piston rod in a sleeving manner via the mounting through-cavity, and the air passing channel communicates with the compression chamber via the cavity.

In one of the embodiments, the shell body includes a main shell and a mounting shell, wherein the main shell is provided with the compression chamber and a top opening communicating with the compression chamber, the mounting shell is mounted to the top opening and is connected to the main shell in a sealing manner, the cavity is arranged in the mounting shell, and the mounting shell is provided with a first opening and a second opening, the first opening being configured to communicate the cavity with the compression chamber and allowing the piston rod to pass through, and the second opening being arranged opposite and spaced apart from the first opening and allowing the piston rod to pass through.

In one of the embodiments, the mounting shell includes an upper shell and a lower shell, which are connected to each other in a sealing manner and enclose the cavity, the lower shell being provided with the first opening, and the upper shell being provided with the second opening.

In one of the embodiments, the upper shell is provided with a first fitting surface, the lower shell is provided with a second fitting surface that is correspondingly fitted with the first fitting surface, at least one of the first fitting surface and the second fitting surface is provided with a first sealing groove, and the air spring assembly further includes a first sealing member arranged in the first sealing groove.

In one of the embodiments, the packaging assembly includes a sealing diaphragm and a press-fitting module, the press-fitting module being in press-fit with the sealing diaphragm to allow the sealing diaphragm to seal an upper side of the cavity.

In one of the embodiments, the upper surface is provided with a protrusion arranged on the outer side wall of the piston rod in a sleeving manner; the press-fitting module includes a connecting sleeve, a first compression ring and a second compression ring, the connecting sleeve being arranged at the second opening and arranged on the outer side wall of the piston rod in a sleeving manner and connected to the piston rod, the first compression ring being arranged on the outer side wall of the piston rod in a sleeving manner and located between the protrusion and the connecting sleeve, and the second compression ring being arranged between a outer shell and the shell body; and one side of the sealing diaphragm is pressed between the protrusion and the first compression ring, and the other side of the sealing diaphragm is pressed between the shell body and the second compression ring.

In one of the embodiments, the piston rod is provided with a positioning shaft shoulder, and the upper support fits with the positioning shaft shoulder in a positioning manner.

In one of the embodiments, at least one of the outer side wall of the piston rod and an inner side wall of the mounting through-cavity is provided with a second sealing groove, and the air spring assembly further includes a second sealing member arranged in the second sealing groove.

In yet another aspect, a vehicle is provided, which includes the air spring assembly.

With regard to the vehicle, and the air spring assembly and the upper support thereof according to the foregoing embodiments, by means of forming the air passing channel in the upper support, the pressurized air can flow to the upper surface of the upper support, so as to achieve the balance of air pressure on two sides of the upper support and thus achieve the force balance to avoid receiving force on one side, thereby preventing offset of the stiffness curve of the upper support and prolonging the service life of the upper support.

### BRIEF DESCRIPTION OF DRAWINGS

The drawings, which constitute a part of the disclosure, are intended to provide a further understanding of the disclosure, and the illustrative embodiments of the disclosure and the description thereof are intended to explain the disclosure and do not unduly limit the disclosure.

In order to more clearly illustrate the technical solutions in the embodiments of the disclosure, the drawings to be used in the description of the embodiments will be described briefly below. Obviously, the drawings in the following description are merely some embodiments of the disclosure. For those of ordinary skill in the art, other drawings can also be obtained according to these drawings without involving any inventive effort.
FIG. 1 is a schematic structure diagram of an air spring assembly according to an embodiment;
FIG. 2 is a cross-sectional view of the air spring assembly in FIG. 1 in direction A-A;
FIG. 3 is a partial enlarged view of part B of the air spring assembly in FIG. 2;
FIG. 4 is a schematic structure diagram of an upper support of the air spring assembly in FIG. 1;
FIG. 5 is a cross-sectional view of the upper support in FIG. 4 in direction C-C; and
FIG. 6 is a front view of the upper support in FIG. 4.

### List of reference signs:

10. air spring assembly; 100. shell body; 110. compression chamber; 120. cavity; 130. main shell; 140. mounting shell; 141. first opening; 142. second opening; 143. upper shell; 144. lower shell; 145. first sealing groove; 200. piston rod; 210. positioning shaft shoulder; 220. second sealing groove; 300. upper support; 310. lower surface; 320. upper surface; 330. air passing channel; 340. mounting through-cavity; 350. outer shell; 360. inner core module; 361. core body; 3611. protrusion; 362. elastic connector; 400. packaging assembly; 410. connecting sleeve; 420. first compression ring; 430. second compression ring; 440. sealing diaphragm.

### DESCRIPTION OF EMBODIMENTS

In order to make the above objectives, features and advantages of the disclosure more clearly understood, the particular embodiments of the disclosure will be described in detail below with reference to the accompanying drawings. In the following description, many specific details are set forth in order to provide a thorough understanding of the disclosure. However, the disclosure can be implemented in numerous other ways that are different from those described herein, a person skilled in the art can make similar improvements without departing from the connotation of the disclosure, and therefore the disclosure is not limited to the particular embodiments disclosed below.

In one embodiment, a vehicle is provided, which includes an air spring assembly 10 arranged on a suspension (not shown) or other parts, thereby achieving a buffering and shock absorption effect by means of the air spring assembly 10. In addition, the air spring assembly 10 can work continuously and reliably and has a long service life.

It should be noted that the vehicle may also include other necessary components, which falls within the prior art and thus will not be repeated herein.

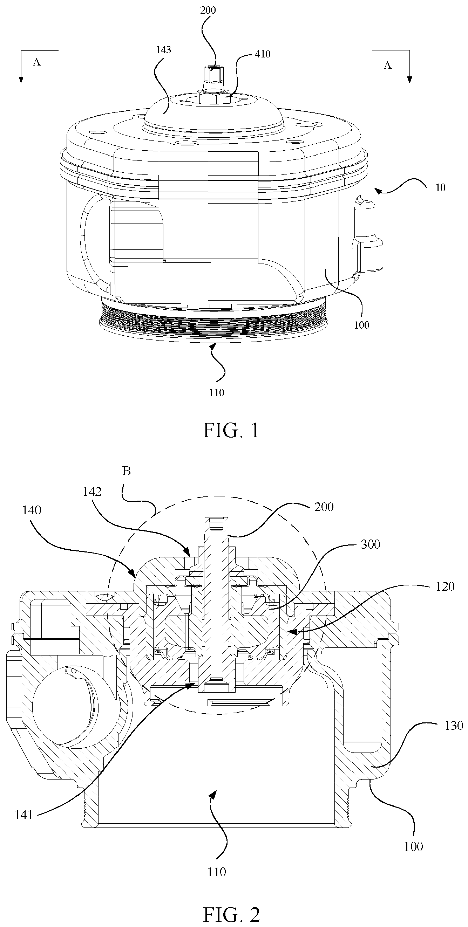

As shown in FIGS. 1 and 2, in an embodiment, an air spring assembly 10 is provided, which includes a shell body 100, a piston rod 200, an upper support 300, and a packaging assembly 400.

As shown in FIG. 2, the shell body 100 is provided with a compression chamber 110 and a cavity 120 located on an upper side of the compression chamber 110, that is, the cavity 120 is located above the compression chamber 110. In addition, the cavity 120 communicates with the compression chamber 110. The piston rod 200 is arranged in the cavity 120 in a penetrating manner and can reciprocate relative to the shell body 100 in an axial direction of the piston rod 200, the upper support 300 is located in the cavity 120, and the upper support 300 is arranged on an outer side wall of the piston rod 200 in a sleeving manner. Meanwhile, the packaging assembly 400 is located above the upper support 300, and the packaging assembly 400 fits with the upper support 300 in a sealing manner to package the upper support 300 in the cavity 120. In this way, when subjected to an external impact force and vibration, the piston rod 200 reciprocate relative to the shell body 100 in an axial direction of the piston rod 200, and the compression chamber 100 filled with pressurized air deforms accordingly, thereby absorbing and buffering against the impact force and vibration to achieve the purpose of buffering and shock absorption.

The shell body 100 may be a main body housing of the air spring assembly 10.

The cavity 120 may have a contour matching that of the upper support 300, so that the upper support 300 can be stably and reliably packaged in the cavity 120.

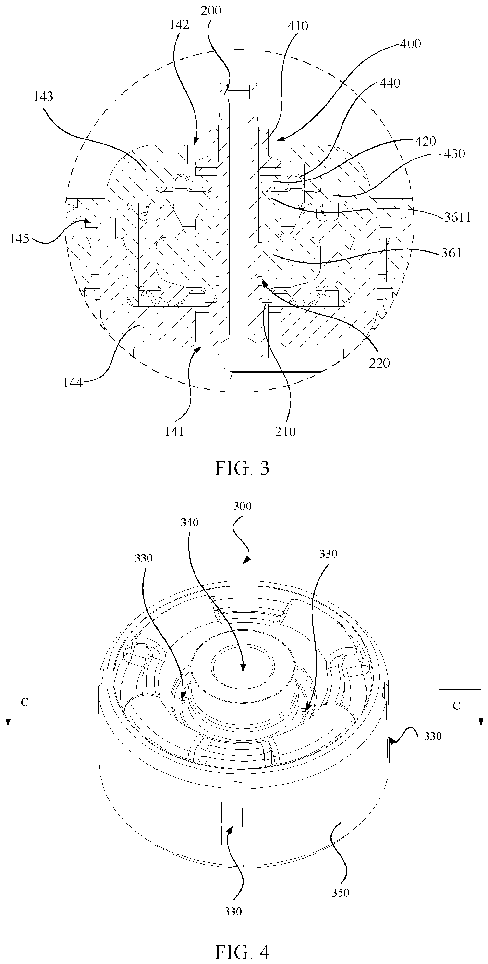

As shown in FIGS. 4 to 6, in an embodiment, an upper support 300 for the air spring assembly 10 is provided. The upper support 300 has a lower surface 310 facing the compression chamber 110 of the air spring assembly and an upper surface 320 facing away from the lower surface 310. That is, the lower surface 310 is located below the upper surface 320, and the lower surface 310 is located above the compression chamber 110. Specifically, the lower surface 310 faces the shell body 100 of the air spring assembly. The upper support 300 is further provided with a mounting through-cavity 340 and an air passing channel 330 spaced apart from the mounting through-cavity 340 in a radial direction of the upper support 300, and two ends of the mounting through-cavity 340 respectively extend to the upper surface 320 and the lower surface 310, that is, the opposite ends of the mounting through-cavity 340 respectively penetrate the upper surface 320 and the lower surface 310, so that the mounting through-cavity 340 allows the piston rod 200 to pass through, and then the upper support 300 is arranged on the outer side wall of the piston rod 200 in a sleeving manner via the mounting through-cavity 340 to achieve assembly and connection between the upper support 300 and the piston rod 200. Meanwhile, two ends of the air passing channel 330 respectively extend to the upper surface 320 and the lower surface 310, that is, the opposite ends of the air passing channel 330 respectively penetrate the upper surface 320 and the lower surface 310. In this way, after the upper support 300 is packaged in the cavity 120 by means of the packaging assembly 400, the air passing channel 330 communicates with the compression chamber 110 via the cavity 120, so that the pressurized air in the compression chamber 110 can flow through the air passing channel 330 to the upper surface 320 of the upper support 300, so as to maintain the balance of air pressure on the upper surface 320 and the lower surface 310 of the upper support 300 and thus achieve the balance of force received on upper and lower ends of the upper support 300, thereby preventing offset of the stiffness curve of the upper support 300 and prolonging the service life of the upper support 300. In addition, the packaging assembly 400 fits with the upper surface 320 of the upper support 300 in a sealing manner, which can prevent the pressurized air in the compression chamber 110 from passing through the air passing channel 330 to the upper surface 320 and then leaking from the top of the air spring assembly 10.

It should be noted that the lower surface 310 of the upper support 300 refers to the outer surface of the upper support 300 that faces the compression chamber 110 located below the upper support 300, and the lower surface 310 is also a flat surface, or may be an uneven curved surface. Similarly, the upper surface 320 of the upper support 300 refers to the outer surface of the upper support 300 that faces away from the lower surface 310, and the upper surface 320 is also a flat surface, or may be an uneven curved surface.

In a traditional air spring assembly 10, the pressurized air is fully sealed in the compression chamber 110 below the upper support 300, and the pressurized air directly or indirectly applies pressure to the lower surface 310 of the upper support 300, so that the upper support 300 receives an upward preload force on one side, thus causing offset of the stiffness curve of the upper support 300 and shortening the service life of the upper support 300. In the upper support 300 according to the foregoing embodiment, by means of forming the air passing channel 330 in the upper support 300, the pressurized air can flow to the upper surface 320 of the upper support 300, so as to achieve the balance of air pressure on two sides of the upper support 300 and thus achieve the force balance to avoid receiving force on one side, thereby preventing offset of the stiffness curve of the upper support 300 and prolonging the service life of the upper support 300.

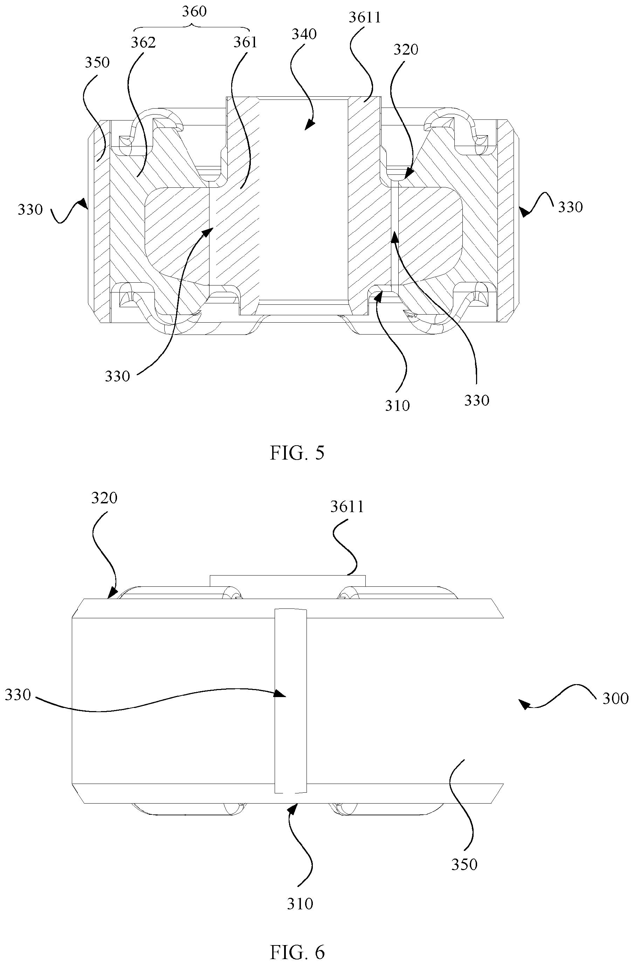

As shown in FIG. 5, further, the upper support 300 includes a outer shell 350 and an inner core module 360. The mounting through-cavity 340 is arranged in the inner core module 360. The outer shell 350 may be made of metal, has high strength, and is not easily deformed. The outer shell 350 may be ring-shaped, and the inner core module 360 may also be ring-shaped. In addition, the outer shell 350 is sleeved on a circumferential side wall of the inner core module 360 and elastically connected with the inner core module 360, so that the inner core module 360 can reciprocate relative to the outer shell 350 in an axial direction of the mounting through-cavity 340. In this way, the outer shell 350 and the shell body 100 are assembled to form the upper support 300, the upper support 300 isencapsulated in the cavity 120 by means of the packaging assembly 400, and the inner core module 360 is sleeved on an outer side wall of the piston rod 200 via the mounting through-cavity 340, so that the inner core module 360 is integrally assembled with the piston rod 200 to enable the piston rod 200 to synchronously drive the inner core module 360 to reciprocate relative to the outer shell 350 and the shell body 100 in the axial direction of the piston rod 200, thereby absorbing and buffering against the impact force and vibration to achieve the purpose of buffering and shock absorption. Moreover, the outer shell 350 and the inner core module 360 jointly define the lower surface 310 and the upper surface 320, that is, the upper surface of the outer shell 350 and the upper surface of the inner core module 360 define the upper surface 320 of the upper support 300, and the lower surface of the outer shell 350 and the lower surface of the inner core module 360 define the lower surface 310 of the upper support 300. Meanwhile, at least one of the outer shell 350 and the inner core module 360 is provided with the air passing channel 330, that is, the outer shell 350 may be independently provided with the air passing channel 330, or the inner core module 360 may be independently provided with the air passing channel 330, or the outer shell 350 and the inner core module 360 are each provided with the air passing channel 330. In this way, by means of the air passing channel 330, the pressurized air in the compression chamber 110 can flow to the upper surface 320 of the upper support 300, so as to achieve the balance of air pressure on two sides of the upper support 300 and thus achieve the force balance to avoid receiving force on one side, thereby preventing offset of the stiffness curve of the upper support 300 and prolonging the service life of the upper support 300.

As shown in FIG. 5, specifically, the inner core module 360 includes a core body 361 and an elastic connector 362. The core body 361 may be made of metal, has high strength, and is not easily deformed; and the elastic connector 362 may be made of rubber, silicone, etc., and has good elasticity. The mounting through-cavity 340 is arranged in the core body 361, the elastic connector 362 wraps at least the circumferential side wall of the core body 361, so that the core body 361 is elastically connected to the outer shell 350 by means of the elastic connector 362, and thus the core body 361 can reciprocate relative to the outer shell 350 in the axial direction of the mounting through-cavity 340. In this way, the connection and fixing between the elastic connector 362 and the core body 361 and the connection and fixing between the elastic connector 362 and the outer shell 350 can be achieved by means of vulcanization, and after the core body 361 is integrally assembled and connected with the outer side wall of the piston rod 200 via the mounting through-cavity 340, the piston rod 200 and the core body 361 can synchronously reciprocate relative to the outer shell 350 and the shell body 100 in the axial direction of the piston rod 200, thereby absorbing and buffering against the impact force and vibration to achieve the purpose of buffering and shock absorption.

In an embodiment, the elastic connector 362 may be in the form of an elastic connecting ring (not shown). The elastic connecting ring is arranged on the circumferential side wall of the core body 361 in a sleeving manner, and is fixedly connected to the core body 361 by means of vulcanization, etc., the outer shell 350 is arranged on the circumferential side wall of the elastic connecting ring in a sleeving manner, and is fixedly connected to the elastic connecting ring by means of vulcanization, etc., and the core body 361 is provided with the air passing channel 330. In this way, the upper surface of the core body 361 defines part of the upper surface 320 of the upper support 300, the lower surface of the core body 361 defines part of the lower surface 310 of the upper support 300, and the pressurized air in the compression chamber 110 can flow through the air passing channel 330 to the upper surface 320, so as to achieve the balance of air pressure on two sides of the upper support 300 and thus achieve the force balance to avoid receiving force on one side, thereby preventing offset of the stiffness curve of the upper support 300 and prolonging the service life of the upper support 300. In addition, the elastic connecting ring is arranged on the circumferential side wall of the core body 361 in a sleeving manner, the outer shell 350 is arranged on the circumferential side wall of the elastic connecting ring in a sleeving manner, and the upper surface 320 of the upper support 300 is not covered by the elastic connecting ring, which facilitates forming of the air passing channel 330 and also avoids blocking the air passing channel 330, so as to ensure the balance of air pressure on the two side of the upper support 300 and thus achieve the force balance.

In another embodiment, the elastic connector 362 may be in the form of an elastic connecting sleeve. The elastic connecting sleeve is sleeved on the outer side wall of the core body 361 and fixedly connected to the core body 361 by means of vulcanization, etc., and at this time, the circumferential side wall and part of the upper and lower surfaces of the core body 361 can be wrapped by the elastic connecting sleeve so as to achieve good protection for the core body 361, and the outer shell 350 is arranged on the circumferential side wall of the elastic connecting sleeve in a sleeving manner and is fixedly connected to the elastic connecting sleeve by means of vulcanization, etc. In addition, the elastic connecting sleeve is provided with a first through hole, the core body 361 is provided with a second through hole, and the second through hole correspondingly communicates with the first through hole to form the air passing channel 330. In this way, the upper surface of the elastic connecting sleeve defines part of the upper surface 320 of the upper support 300, the lower surface of the elastic connecting sleeve defines part of the lower surface 310 of the upper support 300, and through the air passing channel 330 formed by the second through hole communicating with the first through hole, the pressurized air in the compression chamber 110 can flow to the upper surface 320 of the upper support, so as to achieve the balance of air pressure on the two sides of the upper support 300 and thus achieve the force balance to avoid receiving force on one side, thereby preventing offset of the stiffness curve of the upper support 300 and prolonging the service life of the upper support 300. In addition, the circumferential side wall and part of the upper and lower surfaces of the core body 361 can all be wrapped by the elastic connecting sleeve, which facilitates the elastic connection between the outer shell 350 and the core body 361 and enables the core body 361 to stably reciprocate relative to the outer shell 350 in the axial direction of the mounting through-cavity 340.

In yet another embodiment, the outer side wall of the outer shell 350 is provided with the air passing channel 330. This will not affect the elastic connection between the outer shell 350 and the inner core module 360, that is, will not affect the connection between the outer shell 350 and the elastic connector 362, which avoids blocking the air passing channel 330 by the elastic connector 362, ensuring that the upper surface 320 communicates with the lower surface 310 by means of the air passing channel 330, so as to achieve the balance of air pressure and thus achieve the force balance to avoid receiving force on one side, thereby preventing offset of the stiffness curve of the upper support 300 and prolonging the service life of the upper support 300.

It should be noted that the number of air passing channels 330 may be flexibly designed or adjusted according to actual needs and may be, for example, one, two, three or more, as long as the upper surface 320 and the lower surface 310 communicate with each other by means of the air passing channel 330 to achieve the balance of air pressure balance and thus achieve the force balance.

As shown in FIG. 2, optionally, the shell body 100 includes a main shell 130 and a mounting shell 140. The main shell 130 is provided with a compression chamber 110 and a top opening communicating with the compression chamber 110, the mounting shell 140 is mounted at the top opening and is connected to the main shell 130 in a sealing manner, thereby preventing the pressurized air from leaking from the connection between the mounting shell 140 and the main shell 130. The cavity 120 is arranged in the mounting shell 140, the mounting shell 140 is further provided with a first opening 141 and a second opening 142, the first opening 141 is arranged at the bottom of the mounting shell 140, the cavity 120 communicates with the compression chamber 110 via the first opening 141, and the first opening 141 may also allow the piston rod 200 to pass through. Moreover, the second opening 142 is arranged opposite and spaced apart from the first opening 141, that is, the second opening 142 is arranged at the top of the mounting shell 140, and the second opening 142 may also allow the piston rod 200 to pass through. In this way, the upper support 300 is packaged in the cavity 120 of the mounting shell 140 by means of the packaging assembly 400, then the mounting shell 140 and the upper support 300 are mounted as a whole at the top opening of the main shell 130, and the piston rod 200 passes through the first opening 141, the mounting through-cavity 340 and the second opening 142, thereby achieving the modular assembly and connection, simplifying the assembly process, and making the overall structure more compact. In addition, during the subsequent maintenance, the mounting shell 140, the upper support 300 and the piston rod 200 can be removed as a whole from the main shell 130, which is simple and convenient and improves the maintenance efficiency.

The connection between the mounting shell 140 and the main shell 130 in a sealing manner may be achieved by means of bonding, screwing, snap-fitting, etc. In order to improve the sealing performance between the mounting shell 140 and the main shell 130, it is also possible to provide a corresponding sealing element, such as an O-ring, at the part where the mounting shell 140 is in contact with the main shell 130.

As shown in FIG. 3, specifically, the mounting shell 140 includes an upper shell 143 and a lower shell 144. The upper shell 143 and the lower shell 144 are connected to each other in a sealing manner and enclose the cavity 120, the lower shell 144 is provided with the first opening 141, and the upper shell 143 is provided with the second opening 142. In this way, the upper shell 143 is separated from the lower shell 144, the upper support 300 is placed on the lower shell 144, then the upper shell 143 is mounted on the lower shell 144, and then the packaging assembly 400 is used to package the upper support 300 in the cavity 120, with the first opening 141, the mounting through-cavity 340 and the second opening 142 correspondingly communicating with each other, which facilitates the assembly of the upper support 300 and the mounting shell 140 with high assembly efficiency.

The connection between the upper shell 143 and the lower shell 144 in a sealing manner may be achieved by means of bonding, screwing, snap-fitting, etc.

In an embodiment, the upper shell 143 is provided with a first fitting surface (not labeled), and the lower shell 144 is provided with a second fitting surface (not labeled) corresponding to the first fitting surface. As shown in FIG. 3, at least one of the first fitting surface and the second fitting surface is provided with a first sealing groove 145, and the air spring assembly 10 further includes a first sealing member (not shown) arranged in the first sealing groove 145. In this way, the sealing performance between the first fitting surface and the second fitting surface is further improved by means of the first sealing member so as to prevent the pressurized air from leaking from a gap between the first fitting surface and the second fitting surface.

The first fitting surface may be connected to the second fitting surface by means of bonding, screwing, snap-fitting, etc. The first sealing member may be an O-ring, a sealing gasket, or other sealing elements.

The sealing fit between the packaging assembly 400 and the upper surface 320 may be achieved by means of press-fitting or abutting, as long as it is possible to stably and reliably mount the upper support 300 in the cavity 120 and ensure that the pressurized air reaching the upper surface 320 does not leak.

Optionally, the packaging assembly 400 includes a sealing diaphragm 440 and a press-fitting module (not labeled). The press-fitting module can be in press-fit with the sealing diaphragm 440, so that the upper side of the cavity 120 can be sealed by the sealing diaphragm 440 by means of press-fitting of the press-fitting module to the sealing diaphragm 440, thus preventing the pressurized air at the upper surface 320 from leaking from the upper side of the cavity 120.

As shown in FIGS. 3 and 5, in an embodiment, the upper surface 320 is provided with a protrusion 3611. The protrusion 3611 is arranged on the outer side wall of the piston rod 200 in a sleeving manner, that is, the protrusion 3611 surrounds the circumference of the piston rod 200. Specifically, the core body 361 is provided with the protrusion 3611 that protrudes from the upper surface 320 and is flange-shaped. As shown in FIG. 3, the press-fitting module includes a connecting sleeve 410, a first compression ring 420, and a second compression ring 430. The connecting sleeve 410 is arranged at the second opening 142, the connecting sleeve 410 is arranged on the outer side wall of the piston rod 200 in a sleeving manner, and the connecting sleeve 410 is connected to the piston rod 200, so that the connecting sleeve 410 can reciprocate relative to the piston rod 200 in the axial direction of the piston rod 200. The first compression ring 420 is arranged on the outer side wall of the piston rod 200 in a sleeving manner and located between the protrusion 3611 and the connecting sleeve 410. In this way, the first compression ring 420 can abut against the protrusion 3611 by means of the connecting sleeve 410, and then the connecting sleeve 410, the first compression ring 420 and the piston rod 200 can be integrally assembled stably and reliably. The second compression ring 430 is arranged between the outer shell 350 and the shell body 100. Specifically, the second compression ring 430 is arranged between the outer shell 350 and the upper shell 143 of the mounting shell 140, that is, the second compression ring 430 is located above the outer shell 350 and below the upper shell 143. In this way, the outer shell 350 and the inner core module 360 are assembled and then placed on the lower shell 144, and the upper shell 143 is mounted on the lower shell 144, so that the second compression ring 430 abuts against the outer shell 350 by means of the upper shell 143, and then the mounting shell 140, the second compression ring 430 and the outer shell 350 are integrally assembled stably and reliably. Meanwhile, one side of the sealing diaphragm 440 is pressed between the protrusion 3611 and the first compression ring 420, and the other side of the sealing diaphragm 440 is pressed between the shell body 100 and the second compression ring 430. Specifically, the other side of the sealing diaphragm 440 is pressed between the upper shell 143 of the mounting shell 140 and the second compression ring 430, that is, the other side of the sealing diaphragm 440 is located above the second compression ring 430 and below the upper shell 143. In this way, two sides of the sealing diaphragm 440 are respectively pressed between the protrusion 3611 and the first compression ring 420 and between the upper shell 143 and the second compression ring 430, which can not only provide reliable sealing to prevent the pressurized air at the upper surface 320 from leaking from the second opening 142, but also enable the connecting sleeve 410, the first compression ring 420 and the piston rod 200 to reciprocate as a whole relative to the mounting shell 140, the second compression ring 430 and the outer shell 350 in the axial direction of the piston rod 200.

The sealing diaphragm 440 may be made of a material that has both certain elastic deformation ability and certain strength and also has gas sealing performance. In addition, the opposite sides of the sealing diaphragm 440 can be both of a structure similar to a press-fitting head, and press-fitting grooves for mounting of the press-fitting heads may be provided between the protrusion 3611 and the first compression ring 420 and between the upper shell 143 and the second compression ring 430, which can increase the contact area at the corresponding contact part to ensure the sealing effect. Meanwhile, a corresponding folded portion or wrinkled portion may be provided between the two sides of the sealing diaphragm 440, so that the sealing diaphragm 440 may be stretched or folded to adapt to the reciprocating motion of the piston rod 200. The cross-section of the sealing diaphragm 440 may be Ω-shaped, W-shaped, U-shaped, M-shaped, etc.

The connection between the connecting sleeve 410 and the piston rod 200 may be achieved by means of threaded connection, that is, the connecting sleeve 410 is provided with an internal thread, the piston rod 200 is provided with an external thread, and by means of the thread-fitting between the internal thread and the external thread, the connecting sleeve 410 may be rotated to enable the connecting sleeve 410 to reciprocate relative to the piston rod 200 in the axial direction of the piston rod 200, and then the first compression ring 420 abuts against the protrusion 3611. The connection may also be achieved in an interference-fit manner, that is, the connecting sleeve 410 and the piston rod 200 are assembled and connected by means of shaft-hole fitting, so that the connecting sleeve 410 moves in the axial direction of the piston rod 200, and then the first compression ring 420 abuts against the protrusion 3611.

It can be understood that the inner diameter of the second compression ring 430 is greater than the outer diameter of the first compression ring 420, so that the second compression ring 430 will not affect the movement of the first compression ring 420 so as to avoid interference.

As shown in FIG. 3, in addition, the piston rod 200 is provided with a positioning shaft shoulder 210. In this way, when the upper support 300 is arranged on the outer side wall of the piston rod 200 in a sleeving manner, the core body 361 of the upper support 300 fits with the positioning shaft shoulder 210 in a positioning manner, so that the upper support 300 can be accurately assembled and connected to the piston rod 200. In addition, the positioning shaft shoulder 210 can abut and limit the lower end of the core body 361, which, combined with the press-fitting between the first compression ring 420 and the connecting sleeve 410, can prevent axial displacement of the upper support 300.

As shown in FIG. 3, in addition, at least one of the outer side wall of the piston rod 200 and the inner side wall of the mounting through-cavity 340 is provided with a second sealing groove 220. The air spring assembly 10 further includes a second sealing member (not shown) arranged in the second sealing groove 220. In this way, providing the second sealing member further improves the sealing performance between the upper support 300 and the piston rod 200, so as to prevent the pressurized air from leaking from a gap between the upper support 300 and the piston rod 200.

The piston rod 200 and the mounting through-cavity 340 may be assembled in an interference-fit manner. The second sealing member may be an O-ring or other sealing elements.

It should be noted that "... body" and "... portion" may be a part of the corresponding "member" (that is, the "... body" and "... portion" are integrally formed with "other parts of the member"), or may be an independent member that can be separated from the "other parts of the member" (that is, the "... body" and "... portion" may be manufactured independently and then combined with the "other parts of the member" to form a whole). The expression for the "... body" and "... portion" in the disclosure only refers to one of the embodiments for the convenience of reading, and does not limit the scope of protection of the disclosure, and it should be understood as an equivalent technical solution of the disclosure, as long as it includes the above features and has the same effect.

It should be noted that the members included in "units", "assemblies", "mechanisms" and "devices" in the disclosure can also be flexibly combined, that is, the modular production can be carried out according to actual needs to facilitate the modular assembly. The definition to the above members in the disclosure only refers to one of the embodiments for the convenience of reading, and does not limit the scope of protection of the disclosure, and it should be understood as an equivalent technical solution of the disclosure, as long as it includes the above members and has the same effect.

In the description of the disclosure, it should be understood that orientation or position relationships indicated by the terms such as "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial", and "circumferential" are based on the orientation or position relationships shown in the accompanying drawings and are merely for ease of description of the disclosure and simplification of the description, rather than indicating or implying that the devices or elements referred to must have a specific orientation or be constructed and operated in a specific orientation, and thus cannot be construed as limiting the disclosure. The term "and/or" in the disclosure includes any and all combinations of one or more of the associated listed items.

In addition, the terms "first" and "second" are used for descriptive purposes only, and cannot be construed as indicating or implying relative importance or implicitly indicating the number of technical features indicated. Therefore, the features defined with "first" and "second" may explicitly or implicitly include at least one of the features. In the description of the disclosure, the phrase "a plurality of' means at least two, such as two, three, etc., unless otherwise specifically defined.

In the disclosure, unless explicitly specified or defined otherwise, the terms such as "mounting", "connection", "connected" and "fixing" should be interpreted in a broad sense, for example, may be a fixed connection, a detachable connection, or integration; or may be a mechanical connection or an electrical connection; and may be a direct connection or an indirect connection via an intermediate medium, or may be communication between interiors of two elements or interaction between the two elements, unless otherwise specifically defined. For those of ordinary skill in the art, the specific meaning of the terms mentioned above in the disclosure should be construed according to specific circumstances.

In the disclosure, unless otherwise explicitly specified and defined, the expression of a first feature being "on" or "under" a second feature may be the case that the first feature is in direct contact with the second feature, or the first feature is in indirect contact with the second feature via an intermediate medium. Moreover, the expression the first feature being "over", "above" and "on top of' the second feature may be the case that the first feature is directly above or obliquely above the second feature, or only means that the level of the first feature is higher than the second feature. The expression of the first feature being "underneath", "below" and "beneath" the second feature may be the case that the first feature is directly below or obliquely below the second feature, or only means that the level of the first feature is lower than the second feature.

It should be noted that when an element is referred to as being "fixed to", "arranged on", "fixedly arranged on" or "placed on" a further element, it may be directly on the further element, or there may be an intermediate element. When an element is referred to as being "connected" to a further element, it may be directly connected to the further element, or there may be an intermediate element. Further, when one element is referred to as being "in fixed transmission connection" with another element, the two elements may be fixed in a detachable connection manner, or may be fixed in a non-detachable connection manner, as long as they can achieve power transfer, such as sleeving, snap-fitting, integral forming and fixing, welding, etc., which can be implemented in the prior art and will not be repeated herein. An element being perpendicular or approximately perpendicular to another element means that the two elements are perpendicular in an ideal state, but there may be a certain vertical error due to the influence of manufacturing and assembly. The terms "vertical", "horizontal", "left", "right" and similar expressions used herein are for illustrative purposes only but do not represent any unique implementation. As used herein, the term "and/or" includes any and all combinations of one or more related items listed.

It should also be understood that when explaining the connection relationship or positional relationship of elements, although not explicitly described, the connection relationship and positional relationship are interpreted to include an error range that should be within an acceptable deviation range for a particular value as determined by those skilled in the art. For example, "about," "approximately," or "substantially" may be within one or more standard deviations, which will not be defined herein.

The technical features of the above embodiments can be combined in any manner, and in order to simplify the description, not all possible combinations of the technical features of the above embodiments are described. However, as long as there is no conflict between the combinations of these technical features, they should be considered to be within the scope of the description in the disclosure.

The above embodiments merely represent several implementations of the disclosure, giving specifics and details thereof, but should not be understood as limiting the scope of the patent of invention thereby. It should be noted that several variations and improvements may also be made by those of ordinary skill in the art without departing from the concept of the disclosure, and should fall within the scope of protection of the disclosure. Therefore, the scope of protection of the disclosure shall be defined by the appended claims.

## Claims

1. An upper support(300) for an air spring assembly(10), wherein the upper support(300) having a lower surface(310) facing a compression chamber(110) of the air spring assembly(10) and an upper surface(320) facing away from the lower surface(310); and the upper support(300) being further provided with a mounting through-cavity(340) through which a piston rod(200) passes and an air passing channel(330) spaced apart from the mounting through-cavity(340) in a radial direction of the upper support(300), two ends of the mounting through-cavity(340) respectively extending to the upper surface(320) and the lower surface(310), and two ends of the air passing channel(330) respectively extending to the upper surface(320) and the lower surface(310).

2. The upper support(300) according to claim **1,** comprising a outer shell(350) and an inner core module(360), wherein the mounting through-cavity(340) is arranged in the inner core module(360), the outer shell(350) is sleeved on a circumferential side wall of the inner core module(360) and elastically connected with the inner core module(360) to enable the inner core module(360) to reciprocate relative to the outer shell(350) in an axial direction of the piston rod(200), and the outer shell(350) and the inner core module(360) jointly define the upper surface(320) and the lower surface(310); and at least one of the outer shell(350) and the inner core module(360) is provided with the air passing channel(330).

3. The upper support(300) according to claim **2,** wherein the inner core module(360) comprises a core body(361) and an elastic connector(362), the mounting through-cavity(340) is arranged in the core body(361), and the elastic connector(362) wraps at least a circumferential side wall of the core body(361) to elastically connect the core body(361) with the outer shell(350) to enable the core body(361) to reciprocate relative to the outer shell(350) in an axial direction of the mounting through-cavity(340).

4. The upper support(300) according to claim **3,** wherein the elastic connector(362) is configured as an elastic connecting ring, which is sleeved on the circumferential side wall of the core body(361) and fixedly connected with the core body(361), the outer shell(350) is sleeved on a circumferential side wall of the elastic connecting ring and fixedly connected with the elastic connecting ring, and the air passing channel(330) is arranged in the core body(361); or the elastic connector(362) is configured as an elastic connecting sleeve(410), which is sleeved on an outer side wall of the core body(361) and fixedly connected with the core body(361), the outer shell(350) is sleeved on a circumferential side wall of the elastic connecting sleeve(410) and fixedly connected with the elastic connecting sleeve(410), the elastic connecting sleeve(410) is provided with a first through hole, the core body(361) is provided with a second through hole, and the second through hole is correspondingly communicated with the first through hole to form the air passing channel(330).

5. The upper support(300) according to claim **2,** wherein the air passing channel(330) is arranged in an outer side wall of the outer shell(350).

6. An air spring assembly(10), comprising:
a shell body(100), which is provided with a compression chamber(110) and a cavity(120) located on an upper side of the compression chamber(110) and communicating with the compression chamber(110);
a piston rod(200), which passes through the cavity(120) and is capable of reciprocating relative to the shell body(100) in an axial direction of the piston rod(200); and
a packaging assembly(400), and an upper support(300) of any one of claims **1** to **5,** wherein the packaging assembly(400) sealingly fits with the upper surface(320) to encapsulate the upper support(300) within the cavity(120), the upper support(300) is sleeved on an outer side wall of the piston rod(200) via the mounting through-cavity(340), and the air passing channel(330) communicates with the compression chamber(110) via the cavity(120).

7. The air spring assembly(10) according to claim **6,** wherein the shell body(100) comprises a main shell(130) and a mounting shell(140), wherein the main shell(130) is provided with the compression chamber(110) and a top opening communicated with the compression chamber(110), the mounting shell(140) is mounted to the top opening and sealingly connected to the main shell(130), the cavity(120) is arranged in the mounting shell(140), and the mounting shell(140) is provided with a first opening(141) and a second opening(142), the first opening(141) being configured to communicate the cavity(120) with the compression chamber(110) and allowing the piston rod(200) to pass through, and the second opening(142) being arranged opposite and spaced apart from the first opening(141) and allowing the piston rod(200) to pass through.

8. The air spring assembly(10) according to claim **7,** wherein the mounting shell(140) comprises an upper shell(143) and a lower shell(144), which are sealingly connected to each other and enclose the cavity(120), the lower shell(144) being provided with the first opening(141), and the upper shell(143) being provided with the second opening(142).

9. The air spring assembly(10) according to claim **8,** wherein the upper shell(143) is provided with a first fitting surface, the lower shell(144) is provided with a second fitting surface that is correspondingly fitted with the first fitting surface, at least one of the first fitting surface and the second fitting surface is provided with a first sealing groove(145), and the air spring assembly(10) further comprises a first sealing member arranged in the first sealing groove(145).

10. The air spring assembly(10) according to claim **6,** wherein the packaging assembly(400) comprises a sealing diaphragm(440) and a press-fitting module, the press-fitting module being in press-fit with the sealing diaphragm(440) to allow the sealing diaphragm(440) to seal an upper side of the cavity(120).

11. The air spring assembly(10) according to claim **10,** wherein the upper surface(320) is provided with a protrusion(3611) sleeved on the outer side wall of the piston rod(200); the press-fitting module comprises a connecting sleeve(410), a first compression ring(420) and a second compression ring(430), the connecting sleeve(410) being sleeved on the outer side wall of the piston rod(200) and connected to the piston rod(200), the first compression ring(420) being sleeved on the outer side wall of the piston rod(200) and located between the protrusion(3611) and the connecting sleeve(410), and the second compression ring(430) being arranged between a outer shell(350) and the shell body(100); and one side of the sealing diaphragm(440) is pressed between the protrusion(3611) and the first compression ring(420), and the other side of the sealing diaphragm(440) is pressed between the shell body(100) and the second compression ring(430).

12. The air spring assembly(10) according to any one of claims **6** to **11,** wherein the piston rod(200) is provided with a positioning shaft shoulder(210), and the upper support(300) fits with the positioning shaft shoulder(210) in a positioning manner.

13. The air spring assembly(10) according to any one of claims **6** to **11,** wherein at least one of the outer side wall of the piston rod(200) and an inner side wall of the mounting through-cavity(340) is provided with a second sealing groove(220), and the air spring assembly(10) further comprises a second sealing member arranged in the second sealing groove(220).

14. A vehicle, comprising an air spring assembly(10) of any one of claims **6** to **13.**
